# EUROPEAN PATENT APPLICATION

(11) **EP 4 811 006 A2**
(43) Date of publication of application: **23.09.2026**
(21) Application number: 26194615.6
(22) Date of filing: 06.06.2023
(51) Int. Cl.: G01V 1/18

(54) **LOW CROSS FEED MARINE SENSORS**

(30) Priority: 28.06.2022 US 202263356095 P; 12.05.2023 US 202318196789
(62) Document number(s) of the earlier application(s) in accordance with Art. 76 EPC: 23177792.1 / 4 300 054
(71) Applicant: PGS Geophysical AS, 0216 Oslo (NO)
(72) Inventor: FERNIHOUGH, Robert Alexis Peregrin, Houston, 77079 (US)
(74) Representative: Gill Jennings & Every LLP

(57) **Abstract**

A marine sensor system, comprising a sensor that comprises: an electrically conductive hollow cylinder comprising first and second ends, each of the first and second ends defining an outward-facing surface; and first and second generally planar sensing elements, each comprising a first side and a second side; wherein the first side of each of the first and second sensing elements is in contact with a respective one of the outward-facing surfaces of the first and second ends of the hollow cylinder; wherein one of the positive and negative output nodes is electrically coupled to the hollow cylinder; and wherein the other of the positive and negative output nodes (1616) is electrically coupled to the second side of each of the first and second sensing elements.

## Description

### Background

"Cross feed" is a term used to describe the effect of an electrical signal in one channel undesirably coupling into another channel via a parasitic impedance that exists between them. Cross feed can occur within marine seismic sensor systems such as those in seismic streamers, ocean bottom cables, or ocean bottom nodes. For example, voltage and/or current fluctuations in power supply lines, telemetry lines, control lines, or any auxiliary lines, can electrically couple into seismic sensor channels and thus mask the small seismic signal voltages that are generated by the seismic sensors.

To combat cross feed in marine seismic sensor systems, differential amplifiers have been employed in conjunction with unscreened, twisted-pair conductors that couple the small signals from the seismic sensors to the inputs of the differential amplifier. The output of a perfect differential amplifier is equal to the difference between the signals presented at its two inputs, and each conductor in a tightly twisted pair of almost identical conductors will have almost identical parasitic impedance to any point in space. The intention in such designs has been that any undesirable cross feed signals will be induced identically in each of the twisted pair's conductors so that identical "common mode" cross feed signals are presented at each input of the differential amplifier. In theory, because the output of the differential amplifier is proportional to the difference between the signals at its inputs, the identically induced common mode cross feed signals should effectively cancel and should therefore not appear at the differential amplifier's output.

In practice, the just-described scheme has not worked perfectly in marine seismic sensor systems. The result has been that undesirable cross feed signals do in fact appear with significant amplitude on the output of the differential amplifiers, despite the use of high-quality twisted pair wiring between the seismic sensors and the differential amplifier inputs. A need therefore exists for techniques that more effectively address the problem of cross feed in marine seismic sensor systems.

### Brief Description of the Drawings

FIGS. 1 and 2 are top and side views, respectively, of an example towed-streamer marine seismic survey system.
FIG. 3 is a side view of an example ocean bottom cable marine seismic survey system.
FIG. 4 is a side view of an example ocean bottom node marine seismic survey system.
FIGS. 5, 6, and 7 are schematic views illustrating various techniques for incorporating seismic sensors into any of the marine seismic survey systems of FIG. 1-4.
FIG. 8 is a schematic view illustrating a portion of a seismic streamer or cable that exhibits cross feed noise, wherein the cross feed noise is coupled in an imbalanced manner to the output nodes of a sensor disposed in the streamer or cable.
FIGS. 9 and 10 are top and sectional side views, respectively, illustrating a conventional hydrophone sensor that exhibits cross feed noise when deployed in the system of FIG. 8.
FIG. 11 is a schematic diagram illustrating an equivalent circuit of the sensor of FIG. 10.
FIG. 12 is a sectional view of an enclosure containing a seismic sensor in accordance with embodiments.
FIG. 13 is a schematic view illustrating a portion of a seismic streamer or cable in which a seismic sensor is deployed in a manner consistent with FIG. 12.
FIG. 14 is a sectional side view of a pill type sensor with balanced electrode surface area in accordance with embodiments.
FIG. 15 is a schematic diagram illustrating an equivalent circuit of the sensor of FIG. 14.
FIG. 16 is a sectional side view of a conductive cylinder type sensor in accordance with embodiments.
FIG. 17 is a schematic diagram illustrating an equivalent circuit of the sensor of FIG. 16.
FIG. 18 is a sectional view of the sensor of FIG. 16 disposed in an enclosure in accordance with embodiments.
FIG. 19 is an oblique view illustrating an example piezoelectric sensing element in accordance with embodiments.
FIG. 20 is an oblique view illustrating a rigid, insulative ring in accordance with embodiments.
FIG. 21 is a sectional side view illustrating an insulative ring type sensor constructed with the components of FIGS. 19 and 20.
FIG. 22 is a sectional view of the sensor of FIG. 21 disposed in an enclosure in accordance with embodiments.
FIG. 23 is a sectional view of the enclosure and sensor of FIG. 22, indicating equivalent parasitic capacitances between the enclosure and the electrodes of the sensor.
FIG. 24 is a flow diagram illustrating methods for manufacturing sensors and sensor systems in accordance with embodiments.
FIG. 25 is a flow diagram illustrating a method for manufacturing a geophysical data product using sensors and sensor systems in accordance with embodiments.
FIG. 26 is a block diagram illustrating an example computer system suitable for use in accordance with embodiments.

### Detailed Description

This disclosure describes multiple embodiments by way of example and illustration. It is intended that characteristics and features of all described embodiments may be combined in any manner consistent with the teachings, suggestions, and objectives contained herein. Thus, phrases such as "in an embodiment," "in one embodiment," and the like, when used to describe embodiments in a particular context, are not intended to limit the described characteristics or features only to the embodiments appearing in that context.

Indeed, it will be understood by a skilled person that particular combinations of the various features described and defined in any aspects described herein can be implemented and/or supplied and/or used independently. Furthermore, it will be understood that any apparatus feature described herein may be provided as a method feature, and vice versa.

The phrases "based on" or "based at least in part on" refer to one or more inputs that can be used directly or indirectly in making some determination or in performing some computation. Use of those phrases herein is not intended to foreclose using additional or other inputs in making the described determination or in performing the described computation. Rather, determinations or computations so described may be based either solely on the referenced inputs or on those inputs as well as others. The phrase "configured to" as used herein means that the referenced item, when operated, can perform the described function. In this sense, an item can be "configured to" perform a function even when the item is not operating and therefore is not currently performing the function. Use of the phrase "configured to" herein does not necessarily mean that the described item has been modified in some way relative to a previous state. "Coupled" as used herein refers to a connection between items. Such a connection can be direct, or can be indirect, such as through connections with other intermediate items. Terms used herein such as "including," "comprising," and their variants, mean "including but not limited to." Articles of speech such as "a," "an," and "the" as used herein are intended to serve as singular as well as plural references except where the context clearly indicates otherwise.

The term "conductor" as used herein refers to any type of electrical conductor for conducting electric current in an electronic system. For example, a conductor may comprise a metal wire or trace, or may comprise an all-carbon conductor, or may comprise another type of conducting member.

### Marine Seismic Surveying

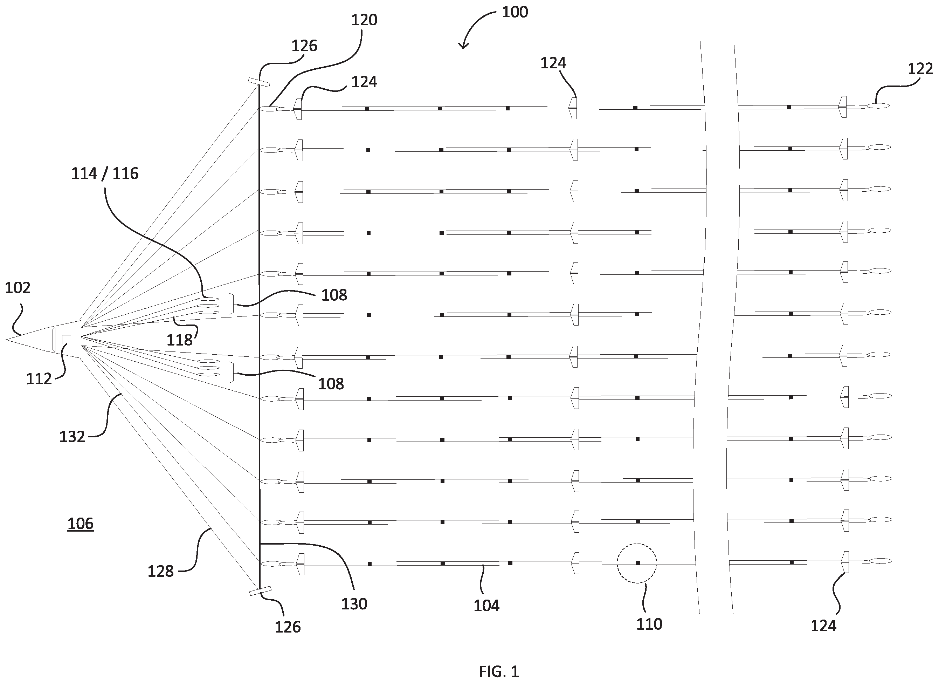

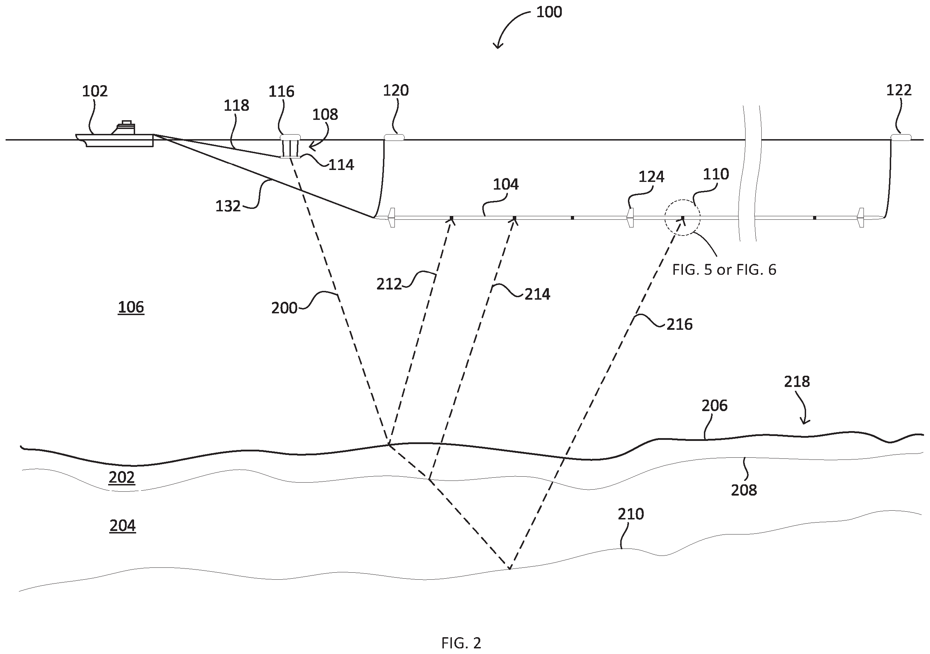

FIGS. 1 and 2 present top and side views, respectively, of an example towed-streamer marine seismic survey system 100. Survey system 100 is representative of a variety of similar geophysical survey systems in which a vessel 102 tows an array of elongate streamers 104 in a body of water 106 such as an ocean, a sea, a bay, or a large lake. Vessel 102 is shown towing twelve streamers 104 in the illustrated example. In other embodiments, any number of streamers may be towed, from as few as one streamer to as many as twenty or more. Embodiments to be described below have useful application in relation to towed-streamer surveys such as that depicted in FIGS. 1 and 2. They may also have useful application in other environments in which other types of sensors or sensor cables are used-for example, in environments that use ocean-bottom sensor cables or ocean-bottom nodes. The terms "streamer" and "cable" may be used interchangeably below.

During a typical marine seismic survey, one or more seismic sources 108 are activated to produce acoustic energy 200 that propagates in body of water 106. Energy 200 penetrates various layers of sediment and rock 202, 204 underlying body of water 106. As it does so, it encounters interfaces 206, 208, 210 between materials having different physical characteristics, including different acoustic impedances. At each such interface, a portion of energy 200 is reflected upward while another portion of the energy is refracted downward and continues toward the next lower interface, as shown. Reflected energy 212, 214, 216 is detected by sensors 110 disposed at intervals along the lengths of streamers 104. In FIGS. 1 and 2, sensors 110 are indicated as black squares inside each of streamers 104. Sensors 110 produce signals corresponding to the reflected energy. These signals are collected and recorded by control equipment 112 located onboard vessel 102. The recorded signals may be processed and analyzed onboard vessel 102 and/or at one or more onshore data centers to produce images of structures within subsurface 218. These images can be useful, for example, in identifying possible locations of hydrocarbon reservoirs within subsurface 218.

In the illustrated example, vessel 102 is shown towing a total of two sources 108. In other systems, different numbers of sources may be used, and the sources may be towed by other vessels, which vessels may or may not tow streamer arrays. Typically, a source 108 includes one or more source subarrays 114, and each subarray 114 includes one or more acoustic emitters such as air guns or marine vibrators. Each subarray 114 may be suspended at a desired depth from a subarray float 116. Compressed air as well as electrical power and control signals may be communicated to each subarray via source umbilical cables 118. Data may be collected, also via source umbilical cables 118, from various sensors located on subarrays 114 and floats 116, such as acoustic transceivers and global positioning system ("GPS") units. Acoustic transceivers and GPS units so disposed help to accurately determine the positions of each subarray 114 during a survey. In some cases, subarrays 114 may be equipped with steering devices to better control their positions during the survey.

Streamers 104 are often very long, on the order of 5 to 10 kilometers, so usually are constructed by coupling numerous shorter streamer sections together. Each streamer 104 may be attached to a dilt float 120 at its proximal end (the end nearest vessel 102) and to a tail buoy 122 at its distal end (the end farthest from vessel 102). Dilt floats 120 and tail buoys 122 may be equipped with GPS units as well, to help determine the positions of each streamer 104 relative to an absolute frame of reference such as the earth. Each streamer 104 may in turn be equipped with acoustic transceivers and/or compass units to help determine their positions relative to one another. In many survey systems 100, streamers 104 include steering devices 124 attached at intervals, such as every 300 meters. Steering devices 124 typically provide one or more control surfaces to enable moving the streamer to a desired depth, or to a desired lateral position, or both. Paravanes 126 are shown coupled to vessel 102 via tow ropes 128. As the vessel tows the equipment, paravanes 126 provide opposing lateral forces that straighten a spreader rope 130, to which each of streamers 104 is attached at its proximal end. Spreader rope 130 helps to establish a desired crossline spacing between the proximal ends of the streamers. Power, control, and data communication pathways are housed within lead-in cables 132, which couple the sensors and control devices in each of streamers 104 to the control equipment 112 onboard vessel 102.

Collectively, the array of streamers 104 forms a sensor surface at which acoustic energy is received for recording by control equipment 112. In many instances, it is desirable for the streamers to be maintained in a straight and parallel configuration to provide a sensor surface that is generally flat, horizontal, and uniform. In other instances, an inclined and/or fan shaped receiving surface may be desired and may be implemented using control devices on the streamers such as those just described. Other array geometries may be implemented as well. Prevailing conditions in body of water 106 may cause the depths and lateral positions of streamers 104 to vary at times, of course. In various embodiments, streamers 104 need not all have the same length and need not all be towed at the same depth or with the same depth profile.

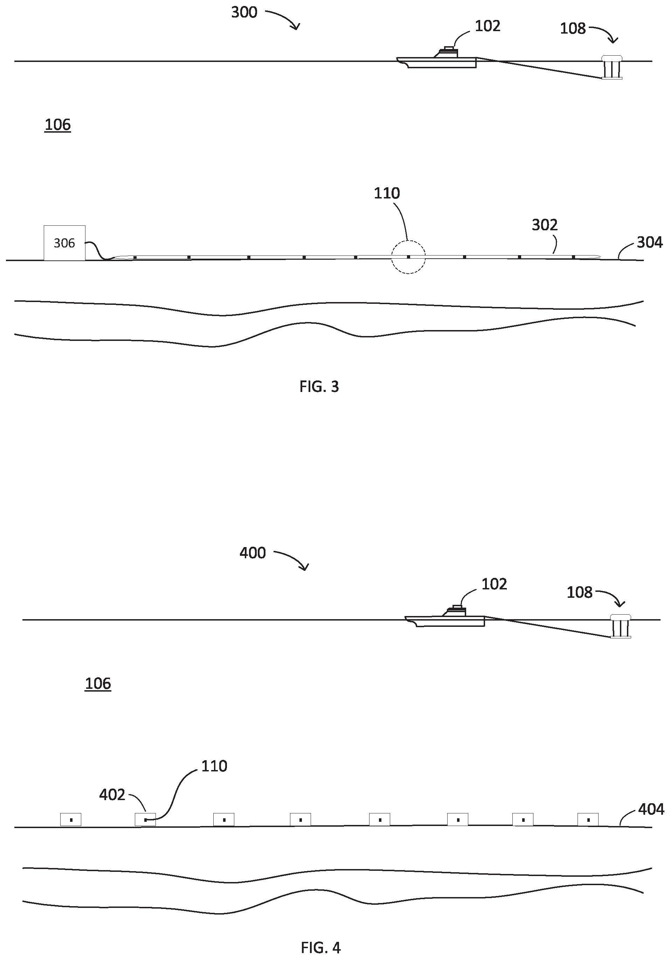

FIG. 3 illustrates an example ocean bottom cable survey system 300, in which a vessel 102 tows one or more sources 108 over an installation of one or more ocean bottom cables 302, each of which is disposed on a water bottom 304. Each cable 302 may include one or more sensors or sensor groups 110 disposed along its length, generally as shown. In turn, each of the cables may be coupled to a manifold 306 in which signals from the sensors may be aggregated and either stored or transmitted to a collection point, or both.

FIG. 4 illustrates an example ocean bottom node survey system 400, in which a vessel 102 tows one or more sources 108 over an installation of one or more ocean bottom nodes 402, each of which is disposed on a water bottom 404. Each node 402 may include one or more sensors or sensor groups 110 as shown. Signals generated by the sensors or sensor groups may be collected in the nodes for later retrieval, or may be transmitted to a collection point, or both.

In any of the above systems, passive acoustic energy may be used to perform the survey either in lieu of or in addition to acoustic energy generated by active seismic sources such as sources 108.

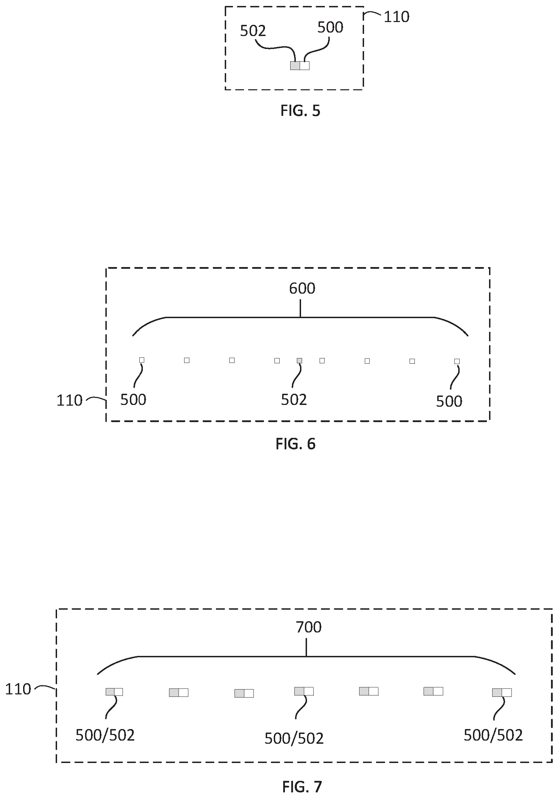

FIGS. 5, 6, and 7 illustrate several example arrangements consistent with embodiments for disposing sensors 110 in a streamer or cable 104 or in an ocean bottom node 402 or an ocean bottom cable 302. In each illustration, pressure sensors are indicated with white squares, while motion sensors are indicated with shaded squares.

In the arrangement of FIG. 5, each sensor location 110 comprises a single pressure sensor 500 collocated with a single motion sensor 502. In the arrangement of FIG. 6, each sensor location 110 comprises a set of pressure sensors 500 forming a single pressure sensor group 600. A motion sensor 502 is disposed substantially at the center of pressure sensor group 600. (It is also possible to employ a similar arrangement in which a single pressure sensor is disposed among a group of motion sensors.) Typically, the signals generated by sensors forming a sensor group are combined or aggregated in some way, such as by summation and/or averaging. Such combination or aggregation may be accomplished in any suitable manner, such as in an analog domain using appropriate electrical coupling, or in a digital domain using digital data processing. In general, a sensor group may include any number of sensors and may comprise either pressure sensors or motion sensors. Normally, however, only measurements of the same type in a group (e.g., pressure, velocity, or acceleration) would be subject to combination or aggregation. Thus, in the particular arrangement illustrated in FIG. 6, the measurements of pressure sensors 500 may be combined or aggregated into a single signal, while the measurements of motion sensor 502 would be preserved as a separate signal. In the arrangement of FIG. 7, each sensor location 110 comprises a group 700 of collocated pressure sensors 500 and motion sensors 502. In the latter arrangement, one aggregated signal can be generated from the pressure sensors in the group, while another aggregated signal can be generated from the motion sensors in the group. Various other permutations of the arrangements of FIGS. 5, 6, and 7 are also possible. For example, any of these arrangements may comprise pressure sensors only or motion sensors only.

Techniques and embodiments to be described herein may be employed in the context of any of the above or similar types of marine seismic survey systems.

### Previously Unrecognized Mechanism for Cross Feed in Marine Seismic Sensor Systems

It has not been previously understood in the art how cross feed can be caused as a result of seawater that leaks into connectors such as those that are disposed between the sections of seismic streamers or ocean bottom cables. The inventor hereof has discovered that such seawater leakage provides a conductive path between electrical signals on connector pins and the body of seawater in which the seismic streamer or cable is immersed. Under these conditions, electrical signals from a connector's pins can be conducted in seawater along the entire length of the exterior of the streamer or cable and may capacitively couple to hydrophones that are disposed inside the streamer or cable. The mechanism for this coupling is the parasitic capacitances that are formed, through the streamer fill material and the enclosing streamer jacket, between the electrodes of the hydrophone and the conformal layer of seawater that is disposed on the exterior surface of the streamer or cable.

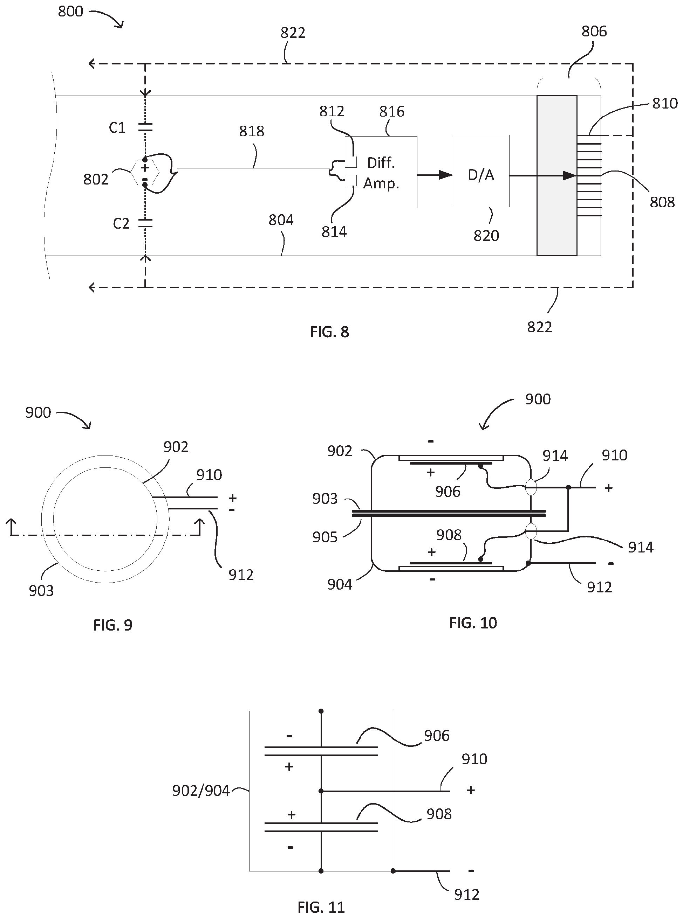

FIG. 8 illustrates this schematically. In FIG. 8, a portion of a seismic streamer section or ocean bottom cable section 800 is shown in see-though profile view. A hydrophone 802 is disposed inside an interior volume of the streamer or cable. The interior volume is defined by an enclosure, which in the illustrated case is a streamer jacket 804. Connectors, such as the illustrated connector 806, are disposed at one or both ends of the streamer or cable. When present, each connector is typically coupled to a corresponding connector on the end of another section of the streamer or cable. The adjoining section is not shown in FIG. 8 so as not to unduly complicate the drawing. Some of the pins in the connector, such as the illustrated pin 808, may be used to carry data signals. Other pins in the connector, such as the illustrated pin 810, may be used to carry power or control signals.

Hydrophone 802, or a group of such hydrophones, provides an output signal via positive and negative electrodes (indicated in the drawing with "+" and "-" symbols). The hydrophone electrodes are shown coupled to respective inputs 812, 814 of a differential amplifier 816 via twisted-pair conductors 818. An output of the differential amplifier is coupled to an input of a digital to analog converter 820. The output of the digital to analog converter is shown coupled to data pin 808 in the connector.

When seawater infiltrates the connector, one or more conductive paths can be established along the length of the streamer via the conformal layer of seawater that is disposed on the outside of the streamer jacket, as generally indicated by dashed lines 822. Within the streamer, parasitic capacitances are present between the electrodes of each hydrophone and adjacent portions of the streamer jacket, as indicated schematically in the drawing by capacitors C1 and C2. These parasitic capacitances can couple unwanted signals from conductive paths 822 to the electrodes of the sensor, and thus onto the twisted pair conductors that are connected to the hydrophone electrodes. (It should be noted that, in any of the embodiments described herein, more than one twisted pair of conductors may be used, if desired. For example, a twisted quad set of conductors comprising two twisted pairs may be used in any of the places where a single twisted pair is shown in the illustrations.) When this occurs, the unwanted signals are added to the desired signals that are generated by the hydrophones. The unwanted signals are therefore coupled to the differential amplifier inputs, along with the desired hydrophone signals, via the one or more twisted pairs of conductors.

The inventor hereof has discovered that, when the parasitic capacitive coupling between the respective electrodes of a hydrophone and the adjacent portions of a streamer jacket is unbalanced (i.e., when C1 and C2 are not equal), then cross feed signals from conductive paths 822 will appear on the output of the differential amplifier in such systems. This occurs because unequal capacitive coupling of the unwanted signals to the two hydrophone electrodes causes the unwanted signals to be coupled to the electrodes with different amplitudes. To the extent the unwanted signals are coupled to the electrodes with differing amplitudes, the unwanted signals are not coupled to the differential amplifier inputs in "common mode." When this occurs, the unwanted signals are not rejected by the differential amplifier as desired, but instead are amplified along with the desired hydrophone signals and are presented along with the desired signals at the output of the amplifier.

The inventor hereof has further discovered that the structure of conventional hydrophones inherently causes unequal capacitive coupling between the hydrophone electrodes and the adjacent portions of a streamer jacket. As a consequence, conventional hydrophones cause unwanted cross feed to appear on the output of an associated differential amplifier due to the mechanisms just described.

FIGS. 9-11 illustrate this problem schematically. FIG. 9 is a top view of a conventional marine seismic hydrophone 900 known as a model T2BX, which model is manufactured by Teledyne Technologies Incorporated. FIG. 10 is a sectional side view of the T2BX hydrophone taken along the section indicated in FIG. 9. Hydrophone 900 is a generally pill shaped device constructed using two opposed metal shells 902, 904 joined to one another at respective flanges 903, 905. The shells are electrically conductive and may be constructed, for example, from a Be/Cu alloy. Two piezoelectric elements 906, 908 are adhered to opposite inside-facing surfaces of the shells such that each of them forms a flexural diaphragm. The polarities of the piezoelectric elements are oriented in opposite directions such that same-poled surfaces of each element face the interior of the hydrophone. The piezoelectric elements are wired in parallel. A positive output node 910 of the hydrophone is formed by electrically coupling the inward-facing surfaces of the piezoelectric elements together. This is accomplished by passing conductors through respective openings in each of the shells and electrically coupling the conductors together outside of the shell, as shown. In some embodiments, glass beads may be used to insulate the conductors where they pass through openings 914 and to fix the conductors in place. A negative output node 912 is formed by soldering a wire to the exterior surface of one of the shells, also as shown.

FIG. 11 presents a schematic diagram of the wiring arrangement shown in FIG. 10. As FIG. 11 shows, the wiring arrangement of the conventional hydrophone causes the shells 902, 904 to become part of the negative output node along with the negatively polarized faces of the piezoelectric elements. In contrast to this, the positive output node of the conventional hydrophone comprises only the positively polarized faces of the piezoelectric elements. The result of this arrangement is that the surface areas of the two output nodes are unequal. More specifically, because the negative output node includes the shells 902, 904 and the positive output node does not, the conductive surface area of the negative output node is substantially larger than is the conductive surface area of the positive output node. Consequently, when the conventional hydrophone is placed inside an enclosure such as a streamer 800 (see FIG. 8), the parasitic capacitances C1 and C2 between the respective output nodes of the hydrophone and the adjacent surfaces of the streamer jacket are unequal. That is, C1 ≠ C2. As was explained above, this results in cross feed being coupled with different amplitudes to the two sensor output nodes, which in turn causes the unwanted cross feed to appear on the output of the differential amplifier along with the desired signal from the hydrophone.

### Example Embodiments

A variety of techniques will now be described for overcoming the above-described problems by balancing the capacitive coupling between the electrodes of a seismic sensor and the adjacent portions of the sensor's enclosure.

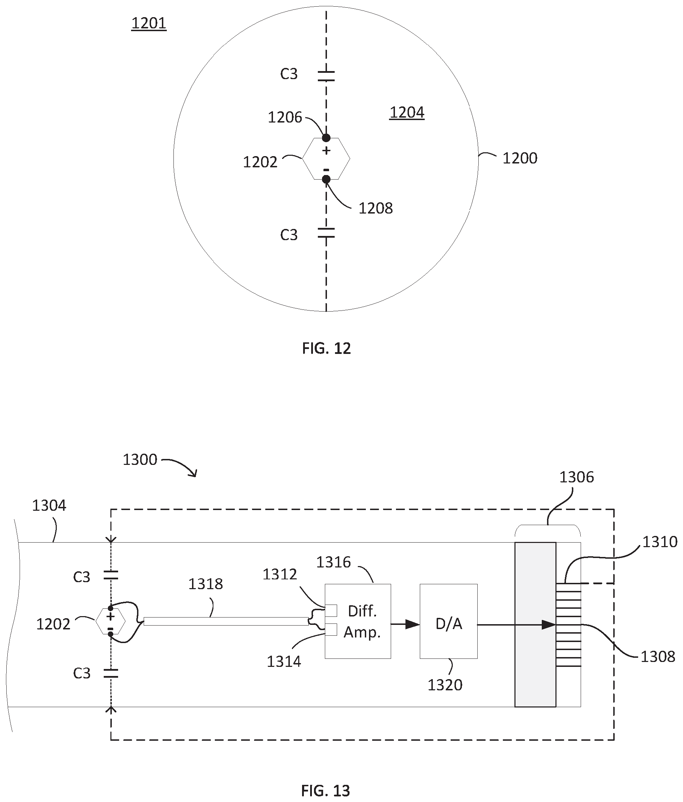

In general, and referring now to FIG. 12, an enclosure 1200 is configured to be immersed in a body of water 1201. Such an enclosure may comprise, for example, the jacket of a seismic streamer or cable, or the housing of a seismic node. A sensor 1202 is disposed within an interior volume 1204 defined by the enclosure. The sensor may comprise, for example, a hydrophone (pressure) sensor, or a motion sensor such as a geophone or an accelerometer. The sensor comprises a positive output node 1206 and a negative output node 1208. The physical characteristics of the output nodes, and the placement of the sensor within the enclosure, are designed such that parasitic capacitances between the output nodes and the enclosure are substantially equal to one another. That is, a parasitic capacitance between the enclosure and the positive output node of the sensor is substantially equal to a parasitic capacitance between the enclosure and the negative output node of the sensor. Both such parasitic capacitances are labeled C3 in the drawing. In various embodiments, equality of the two parasitic capacitances may be achieved by designing the sensor such that the conductive surface areas of both of its output nodes are substantially equal, or by disposing the sensor within the enclosure so that the distances between the respective sensor output nodes and the adjacent enclosure surfaces result in equal parasitic capacitances, or by a combination of both techniques.

FIG. 13 illustrates an example system that utilizes the sensor and enclosure arrangement of FIG. 12. In the example of FIG. 13, the enclosure comprises the outer jacket 1304 of a streamer section 1300. A sensor 1202 is disposed within the interior volume of the streamer in a manner consistent with the arrangement of FIG. 12 such that parasitic capacitances C3 between the output nodes of the sensor and the adjacent portions of the streamer jacket are substantially equal, as shown. The positive and negative output nodes of the sensor are coupled to first and second signal inputs 1312, 1314 of a differential amplifier. The coupling of the output nodes to the differential amplifier inputs may be accomplished using any suitable technique. For example, one or more twisted pairs of conductors 1318 may be used. If desired, the output of the differential amplifier may be coupled to an analog to digital converter 1320. Either the output of the differential amplifier or the output of the digital to analog converter may be sent to a data recording system 112 using a suitable communication system. For example, either output may be coupled to the recording system via one or more data telemetry pins 1308 in a connector 1306 disposed at an end of the streamer section. In this manner, when the connector is infiltrated with water, unwanted cross feed signals from another connector pin, such as from a power or control pin 1310 of the connector, will be coupled with substantially equal amplitudes to each of the positive and negative output nodes of the sensor via the substantially equal parasitic capacitances C3. Consequently, the cross feed signals will appear as common mode signals at the inputs of the differential amplifier, and will be rejected (canceled) by the differential amplifier as desired. Thus, the amplified signal appearing at the output of the amplifier will represent the sensor output with dramatically reduced or eliminated cross feed noise.

Experiments have demonstrated that, by employing the techniques described herein, a reduction of cross feed signal amplitude of approximately 30 dB can be achieved.

As was explained above, sensor 1202 may take a variety of forms, provided that the physical characteristics of the sensor output nodes and the position of the sensor within the streamer or other enclosure are such that the parasitic capacitances between the sensor output nodes and the enclosure are substantially balanced. Three example sensor types will now be described that may have particular usefulness in such applications.

### Pill Type Sensor with Balanced Electrode Surface Area

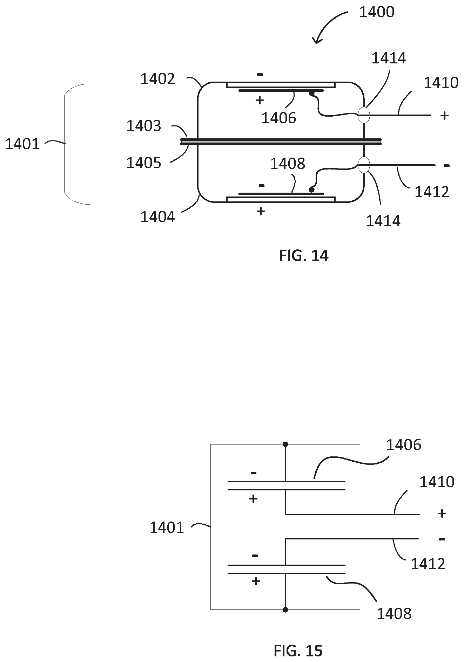

FIG. 14 illustrates a pill type sensor 1400 having a body 1401 constructed with opposing electrically conductive shells 1402, 1404. The shells may be constructed using any suitable electrically conductive material, including for example the Be/Cu alloy used to construct the T2BX sensor described above. The shells may be joined by forming an electrically conductive bond between them, such as by soldering flanges 1403, 1405 together. Two generally planar sensing elements 1406, 1408 are disposed on interior surfaces of the respective shells, as shown. Each sensing element is polarized such that it comprises a positive and a negative side. The sensing elements may comprise any suitable polarized flexural material. For example, they may be constructed using piezoelectric elements.

In the sensor of FIG. 14, the polarities of the sensing elements face in a same direction, such that the positive side of sensing element 1408 is in contact with the interior surface of shell 1404, whereas the negative side of sensing element 1406 is in contact with the interior surface of shell 1402. A positive output node 1410 of the sensor is formed by coupling a wire from the positive side of sensing element 1406 to the exterior of the sensor body. A negative output node 1412 of the sensor is formed by coupling a wire from the negative side of sensing element 1408 to the exterior of the sensor body. The two output nodes may be made accessible outside the sensor body by any suitable means, including by passing the conductors through respective openings 1414 in the shells. Each opening may be sealed, if desired, with an insulative material such as a glass bead.

FIG. 15 presents a schematic diagram of the wiring arrangement shown in FIG. 14. As FIG. 15 shows, the sensing elements of sensor 1400 are wired in series with one another, such that the electrically conductive body 1401 of the sensor is electrically at an equipotential position between the two sensing elements. Because the shells and the sensing elements are symmetrical, this arrangement causes the electrically conductive surface area of positive output node 1410 (which surface area comprises the positive side of sensing element 1406 and the connected positive output node wire) to be substantially equal to the electrically conductive surface area of negative output node 1412 (which surface area comprises the negative side of sensing element 1408 and the connected negative output node wire).

### Conductive Cylinder Type Sensor

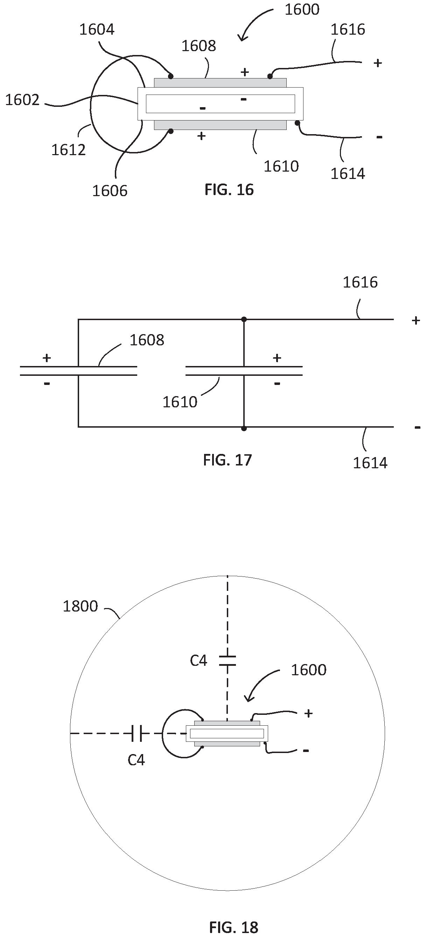

FIG. 16 illustrates a sensor 1600 that comprises an electrically conductive hollow cylinder 1602. In some embodiments, the cylinder may be wider in its diameter dimension than it is tall in its height dimension, such that the cylinder exhibits a disk shape. The illustrated cylinder includes first and second ends 1604, 1606, each of which defines a surface whose normal faces outwardly from the cylinder in a direction parallel to a longitudinal axis of the cylinder. First and second generally planar sensing elements 1608, 1610 are disposed at the ends of the cylinder in contact with respective ones of the outward-facing surfaces. In various embodiments, the cylinder may comprise an electrically conductive hollow structure with closed ends, or may comprise an electrically conductive ring with open ends. In the latter embodiments, the outward-facing surfaces of the cylinder may comprise electrically conductive circular substrates to which the respective generally planar sensing elements may be attached. In any embodiments, the cylinder and sending elements may be constructed using any suitable materials. For example, the cylinder may be constructed using metal, and the sensing elements may be constructed using flexural piezoelectric elements, such as piezoelectric ceramic/metal unimorph bender disks, as shown. By way of explanation, a unimorph device comprises a piezoelectric element on one side of a flexural disk, while a bimorph device comprises two piezoelectric elements disposed one on each side of a flexural disk. Although unimorphs are shown in the embodiment of FIG. 16, persons having skill in the art and having reference to this disclosure will understand that similar embodiments may be constructed using bimorph devices as well.

The two sensing elements are polarized such that each comprises a positive side and a negative side. In the illustrated embodiment, the same polarity side of each sensing element faces inwardly, in contact with the cylinder. The outward-facing surfaces of each sensing element are electrically coupled to one another, such as with a wire 1612. One of the sensor output nodes, node 1614, is electrically coupled to the cylinder, while the other sensor output node, node 1616, is electrically coupled to an outward facing surface of one of the sensing elements.

FIG. 17 presents a schematic diagram of the wiring arrangement of sensor 1600. As the diagram shows, the two sensing elements 1608, 1610 are wired in parallel with one another. For sensors constructed in this manner, the electrically conductive surface area of the positive output node comprises the two outwardly facing sides of the sensing elements and the conductors that connect them to the positive sensor terminal, while the electrically conductive surface area of the negative output node comprises the cylinder side surface and the exposed portions of the outward-facing cylinder ends.

For sensors constructed in accordance with FIG. 16, the electrically conductive surface areas of the positive and negative output nodes may be substantially equal, but in some cases may not be. In either case, and referring now to FIG. 18, the sensor 1600 may be positioned within an interior volume of an enclosure 1800 such that the parasitic capacitances formed between the two sensor output nodes and the enclosure are substantially equal, as indicated in the drawing by the two equal-value capacitances C4. As persons having skill in the art will appreciate, the specifics of such placement within the enclosure may vary depending on the shape of the enclosure and the relative sizes of the sensor components. In some embodiments, the sensor may not be disposed at a center of symmetry of the enclosure in order to achieve balance in the parasitic capacitances. In other embodiments, the opposite may be the case.

In still further embodiments, surface areas of piezoelectric sensing elements 1608, 1610, and surface areas of cylinder 1602, may be scaled relative to one another to ensure that the just-described parasitic capacitances will be substantially equal to one another when the sensor 1600 is disposed within the enclosure 1800. This may be accomplished, for example, by choosing a location for mounting the sensor within the enclosure and using a finite element analysis tool to compute the integral (e.g., the sum) of multiple elemental parasitic capacitances computed in all directions around the surfaces of the respective components of the sensor, each to a corresponding point on the surface of the enclosure. Depending on the type of enclosure in which the sensor is to be deployed, the properties of the materials inside the enclosure may also be considered during this computation. For example, for an enclosure comprising a seismic streamer, the presence and location of metal strength members inside the enclosure and of plastic spacers inside the enclosure may be considered when computing the parasitic capacitances.

### Insulative Ring Type Sensor

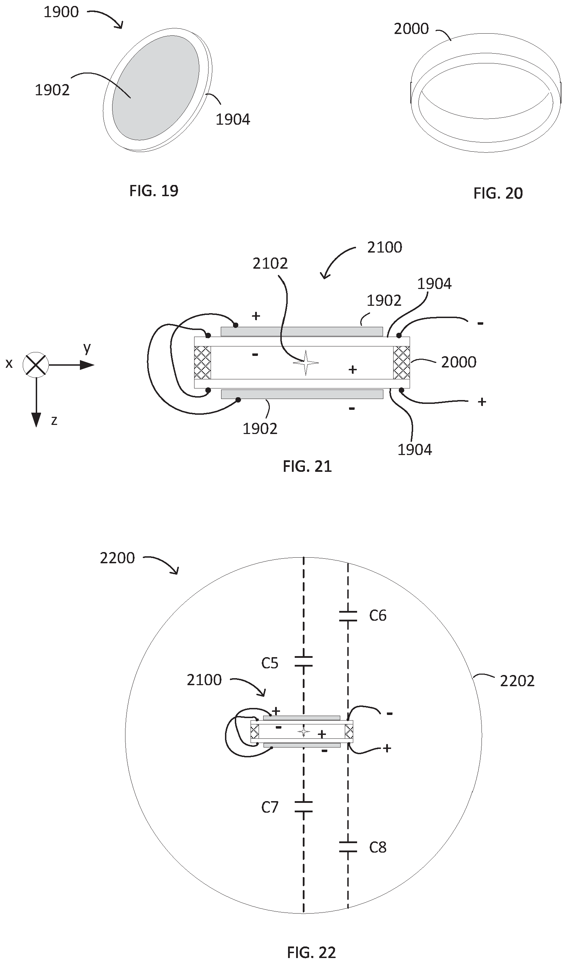

FIGS. 19-21 illustrate another type of sensor 2100 that may be constructed using a rigid, electrically insulative rigid ring 2000. To construct such a sensor, two polarized generally planar sensing elements 1900 may be adhered to the ring at each of its ends, as shown in the sectional view of FIG. 21. The sensing elements may take a variety of forms. In some embodiments, the sensing elements may comprise unimorph or bimorph bender disks of the same or a similar type as those discussed above. For example, each may comprise a ceramic/metal unimorph bender disk, as shown. Each such disk may comprise a single silver-surfaced polarized piezoceramic disk 1902 that is itself adhered to a larger diameter substrate disk 1904.

In sensor 2100, the two sensing elements are polarized and are wired in parallel with one another such that the equivalent electrical circuit is the same as that shown in FIG. 17 (the positive sides of each sensing element are electrically coupled to the positive output node of the sensor, and the negative sides of each sensing element are electrically coupled to the negative output node of the sensor). The polarities of the sensing elements in sensor 2100 are reversed, however, relative to those shown in FIG. 16. That is, while each sensing element in sensor 2100 physically faces in an opposite direction from the other sensing element (both face outward relative to the sensor), one sensing element has its negative side facing inward relative to the sensor, and the other sensing element has its positive side facing inward relative to the sensor.

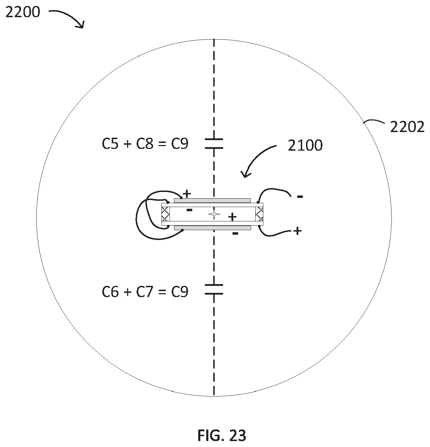

FIG. 22 illustrates that, when sensor 2100 is disposed within the interior volume of a seismic streamer or cable 2202 having a circular cross section, four parasitic capacitances C5, C6, C7, C8 are formed between the sensor electrodes and the adjacent portions of the enclosure. In general, due to the physical characteristics of the sensing elements and their substrates, C5 ≠ C6 and C7 ≠ C8. Because of the design of sensor 2100, however, the sensor exhibits a center of symmetry 2102. The center of symmetry represents a point about which the sensor is symmetrical in each of three orthogonal axes x, y, z, (the x axis extends into the page). When the center of symmetry of the sensor is disposed on the longitudinal axis of the seismic streamer or cable 2202 as shown in FIG. 22, C5 = C7, and C6 = C8. It follows from this that C5 + C8 = C6 + C7. The sum C5 + C8 represents the effective parasitic capacitance between the streamer jacket or enclosure and the positive electrode of the sensor. Similarly, the sum C6 + C7 represents the effective parasitic capacitance between the streamer jacket or enclosure and the negative electrode of the sensor. As FIG. 23 illustrates, when the sensor is placed in the streamer such that its center of symmetry is aligned with the longitudinal axis of the streamer, the parasitic capacitances, C9, formed between the respective sensor electrodes and the streamer jacket are equal, as desired. Cross feed signals from the conformal layer of seawater surrounding the streamer will therefore be coupled to the sensor electrodes with equal amplitudes, and consequently will be presented to the inputs of an associated differential amplifier in common mode, as was explained above.

The same sensor may be mounted with similar effect in enclosures other than streamers or cables. For example, if the enclosure of a seismic node exhibits symmetry in three orthogonal axes such that the node itself defines a center of symmetry, then the sensor may be placed within the node such that the sensor's center of symmetry is collocated with the node's center of symmetry. With such a placement of the sensor within the node, the parasitic capacitances formed between the node enclosure and the sensor electrodes will be equal.

In the case of a seismic streamer or cable, the longitudinal axis of the streamer or cable may represent a longitudinal center of symmetry for the streamer or cable, and the sensor may be located at any point along the longitudinal axis.

In any of the above classes of embodiments, the sensor may be positioned within the enclosure such that its positive and negative output nodes are substantially equidistant from the enclosure.

Moreover, while example embodiments have been described above in relation to hydrophone sensors, persons having skill in the art and having reference to this disclosure will appreciate that the same techniques may be employed with respect to other types of sensors, such as motion sensors or accelerometers, with a commensurate reduction in cross feed noise in the output of a differential amplifier associated with the sensor.

### Method of Manufacture

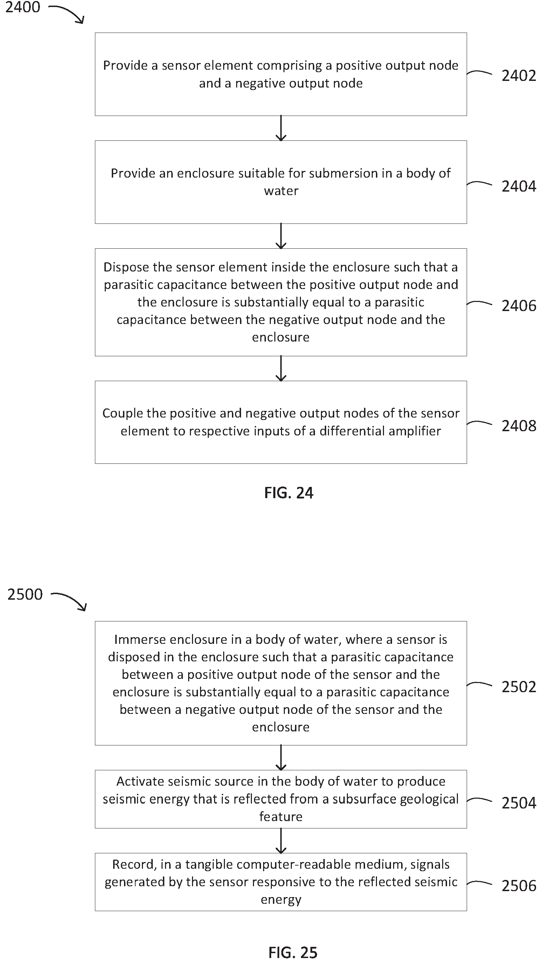

FIG. 24 illustrates a method 2400 of manufacturing any of the sensor devices and systems described herein. At step 2402, a sensor element is provided such that the sensor element comprises a positive output node and a negative output node. The sensor element can be, for example, a sensor in accordance with any of the sensor embodiments described above. At step 2404, an enclosure suitable for submersion in a body of water is provided. Such an enclosure may comprise, for example, a seismic streamer or cable, or a seismic node. At step 2406, the sensor element is disposed within the enclosure in a manner such that a parasitic capacitance between the positive output node of the sensor element and the enclosure is substantially equal to a parasitic capacitance between the negative output node of the sensor element and the enclosure. Step 2406 may be accomplished in accordance with any of the examples described above, in addition to others. At step 2408, the output nodes of the sensor element are electrically coupled to respective inputs of a differential amplifier, which may be contained within the enclosure or which may be located elsewhere. The electrical coupling of the output nodes to the differential amplifier may be accomplished using any suitable technique, including with the use of one or more twisted pairs of conductors.

In further embodiments, such as those described in relation to FIGS. 16-18, the method may further comprise scaling surface areas of the sensing elements and of the cylinder such that the above-described parasitic capacitances are substantially equal when the sensor element is disposed within the enclosure. As was mentioned above, a finite element analysis tool may be used for this purpose, if desired.

### Manufacture of a Geophysical Data Product

FIG. 25 illustrates a method 2500 of manufacturing a geophysical data product using sensors or sensor systems of the types described herein. At step 2502, an enclosure is immersed in a body of water. A sensor in disposed within the enclosure such that a parasitic capacitance between a positive output node of the sensor and the enclosure is substantially equal to a parasitic capacitance between a negative output node of the sensor and the enclosure. The sensor and the enclosure may take a variety of forms, including any of those described above. For example, the enclosure may comprise a seismic streamer, cable, or node, and the sensor may comprise any of the example embodiments described above. Moreover, an individual sensor may be used in embodiments, or a group of such sensors may be used, as appropriate to the application. The output nodes of the sensor or sensors may be coupled to the inputs of one or more differential amplifiers, and the outputs of the differential amplifiers may be transmitted to a data recording system--either in analog or in digital form. At step 2504, one or more seismic sources are activated in the body of water to produce seismic energy that propagates into a subsurface and that is reflected from one or more subsurface geological features. At step 2506, signals generated by the sensor or sensors responsive to the reflected seismic energy are recorded in a tangible, computer readable medium, thereby completing the manufacture of a geophysical data product that comprises the computer readable medium with the data contained therein. The signals recorded therein may comprise direct outputs of the one or more sensors, or may comprise outputs of one or more differential amplifiers coupled to the sensors, or may comprise outputs of one or more digital to analog converters coupled to respective differential amplifiers, as appropriate to the application.

### Computer System

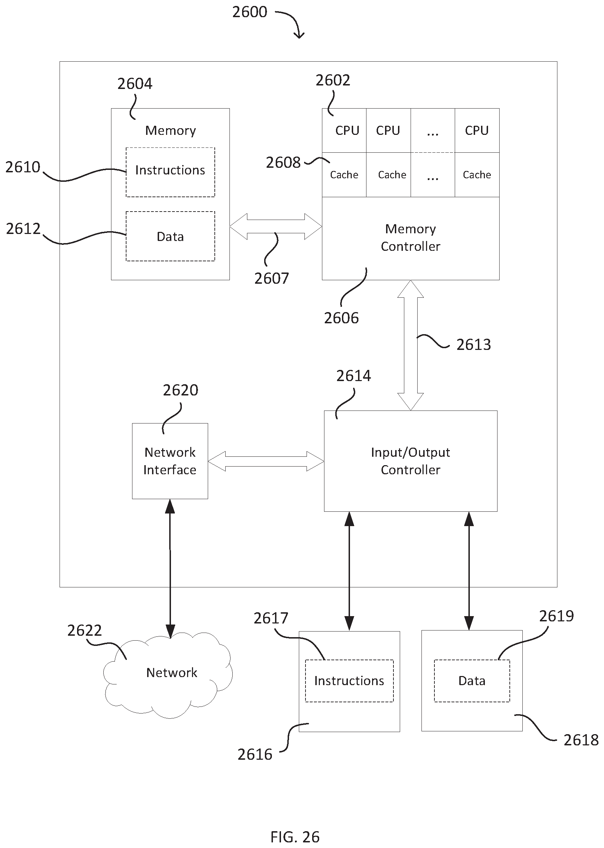

FIG. 26 is a block diagram illustrating an example computer system 2600 that may be used to perform any of the methods described above. A computer system such as computer system 2600 may also be used to produce a computer-readable survey plan that, if followed by navigation and control equipment onboard a survey vessel, causes the vessel to perform any of the methods described above. Computer system 2600 includes one or more central processor unit ("CPU") cores 2602 coupled to a system memory 2604 by a high-speed memory controller 2606 and an associated high-speed memory bus 2607. System memory 2604 typically comprises a large array of random-access memory locations, often housed in multiple dynamic random-access memory ("DRAM") devices, which in turn are housed in one or more dual inline memory module ("DIMM") packages. Each CPU core 2602 is associated with one or more levels of high-speed cache memory 2608, as shown. Each core 2602 can execute computer-readable instructions 2610 stored in system memory 2604, and can thereby perform operations on data 2612, also stored in system memory 2604.

Memory controller 2606 is coupled, via input/output bus 2613, to one or more input/output controllers such as input/output controller 2614. Input /output controller 2614 is in turn coupled to one or more tangible, non-volatile, computer readable media such as computer-readable medium 2616 and computer-readable medium 2618. Non-limiting examples of such computer-readable media include so-called solid-state disks ("SSDs"), spinning-media magnetic disks, optical disks, flash drives, magnetic tape, and the like. Media 2616, 2618 may be permanently attached to computer system 2600 or may be removable and portable. In the example shown, medium 2616 has instructions 2617 (software) stored therein, while medium 2618 has data 2619 stored therein. Operating system software executing on computer system 2600 may be employed to enable a variety of functions, including transfer of instructions 2610, 2617 and data 2612, 2619 back and forth between media 2616, 2618 and system memory 2604.

Computer system 2600 may represent a single, stand-alone computer workstation that is coupled to input/output devices such as a keyboard, pointing device and display. It may also represent one node in a larger, multi-node or multi-computer system such as a cluster, in which case access to its computing capabilities may be provided by software that interacts with and/or controls the cluster. Nodes in such a cluster may be collocated in a single data center or may be distributed across multiple locations or data centers in distinct geographic regions. Further still, computer system 2600 may represent an access point from which such a cluster or multi-computer system may be accessed and/or controlled. Any of these or their components or variants may be referred to herein as "computing apparatus" or a "computing device."

In example embodiments, data 2619 may correspond to sensor measurements or other data recorded during a marine geophysical survey or may correspond to a survey plan for implementing any of the methods described herein. Instructions 2617 may correspond to algorithms for performing any of the methods described herein, or for producing a computer-readable survey plan for implementing one or more of such methods. In such embodiments, instructions 2617, when executed by one or more computing devices such as one or more of CPU cores 2602, cause the computing device to perform operations described herein on the data, producing results that may be stored in one or more tangible, non-volatile, computer-readable media such as medium 2618. In such embodiments, medium 2618 constitutes a geophysical data product that is manufactured by using the computing device to perform methods described herein and by storing the results in the medium. Geophysical data product 2618 may be stored locally or may be transported to other locations where further processing and analysis of its contents may be performed. If desired, a computer system such as computer system 2600 may be employed to transmit the geophysical data product electronically to other locations via a network interface 2620 and a network 2622 (e.g. the Internet). Upon receipt of the transmission, another geophysical data product may be manufactured at the receiving location by storing contents of the transmission, or processed versions thereof, in another tangible, non-volatile, computer readable medium. Similarly, geophysical data product 2618 may be manufactured by using a local computer system 2600 to access one or more remotely-located computing devices in order to execute instructions 2617 remotely, and then to store results from the computations on a medium 2618 that is attached either to the local computer or to one of the remote computers. The word "medium" as used herein should be construed to include one or more of such media.

Multiple specific embodiments have been described above and in the appended claims. Such embodiments have been provided by way of example and illustration. Persons having skill in the art and having reference to this disclosure will perceive various utilitarian combinations, modifications and generalizations of the features and characteristics of the embodiments so described. For example, steps in methods described herein may generally be performed in any order, and some steps may be omitted, while other steps may be added, except where the context clearly indicates otherwise. Similarly, components in structures described herein may be arranged in different positions or locations, and some components may be omitted, while other components may be added, except where the context clearly indicates otherwise. The scope of the disclosure is intended to include all such combinations, modifications, and generalizations as well as their equivalents.

Further exemplary embodiments of the present disclosure are set out in the following numbered clauses:
Clause 1. A marine sensor system, comprising:
   an enclosure defining an interior volume, wherein the enclosure is configured to be immersed in water;
   a sensor disposed within the interior volume, wherein the sensor comprises a positive output node and a negative output node; and
   wherein a first parasitic capacitance between the positive output node and the enclosure is substantially equal to a second parasitic capacitance between the negative output node and the enclosure.
Clause 2. The system of clause 1:
   further comprising a differential amplifier having a first signal input and a second signal input; and
   wherein the positive output node of the sensor is coupled to the first signal input of the differential amplifier, and the negative output node of the sensor is coupled to the second signal input of the differential amplifier.
Clause 3. The system of clause 2, wherein:
   the coupling of the output nodes of the sensor to the signal inputs of the differential amplifier comprises at least one twisted pair of conductors.
Clause 4. The system of clause 1, wherein:
   a surface area of the positive output node of the sensor is substantially equal to a surface area of the negative output node of the sensor.
Clause 5. The system of clause 1, wherein the sensor comprises:
   first and second generally planar sensing elements, each sensing element comprising a positive side and a negative side;
   a body formed by first and second opposing shells, wherein each of the first and second shells is electrically conductive;
   wherein the first sensing element is disposed on an interior surface of the first shell such that its positive side is in contact with the first shell, and the second sensing element is disposed on an interior surface of the second shell such that its negative side is in contact with the second shell;
   wherein the positive output node is electrically coupled to the positive side of the second sensing element, and the negative output node is electrically coupled to the negative side of the first sensing element; and
   wherein the positive output node and the negative output node are accessible outside the body.
Clause 6. The system of clause 5, wherein:
   each of the first and second sensing elements comprises a piezoelectric element.
Clause 7. The system of clause 1, wherein the sensor comprises:
   an electrically conductive hollow cylinder comprising first and second ends, each of the first and second ends defining an outward-facing surface; and
   first and second generally planar sensing elements, each comprising a first side and a second side;
   wherein the first side of each of the first and second sensing elements is in contact with a respective one of the outward-facing surfaces of the first and second ends of the hollow cylinder;
   wherein one of the positive and negative output nodes is electrically coupled to the hollow cylinder; and
   wherein the other of the positive and negative output nodes is electrically coupled to the second side of each of the first and second sensing elements.
Clause 8. The system of clause 7, wherein:
   each of the first and second sensing elements comprises a piezoelectric element.
Clause 9. The system of clause 1, wherein the sensor comprises:
   an electrically insulative ring comprising first and second ends; and
   first and second generally planar sensing elements, each comprising a positive side and a negative side;
   wherein the first and second sensing elements are adhered to opposite ends of the ring such that the sensing elements face in opposite directions;
   wherein the first and second sensing elements are wired in parallel such that their positive sides are electrically coupled to one another and their negative sides are electrically coupled to one another; and
   wherein the positive sides are electrically coupled to the positive output node and the negative sides are electrically coupled to the negative output node.
Clause 10. The system of clause 9, wherein:
   each of the first and second sensing elements comprises a piezoelectric element.
Clause 11. The system of clause 9, wherein:
   each of the first and second sensing elements comprises a piezoelectric ceramic/metal plate bender disk.
Clause 12. The system of clause 9, wherein:
   the enclosure defines an enclosure center of symmetry;
   the sensor defines a sensor center of symmetry; and
   the sensor center of symmetry is aligned with the enclosure center of symmetry.
Clause 13. The system of clause 1, wherein:
   the positive output node of the sensor and the negative output node of the sensor are substantially equidistant from the enclosure.
Clause 14. The system of clause 1, wherein:
   the enclosure comprises an outer jacket of a seismic streamer or ocean bottom cable.
Clause 15. The system of clause 14, wherein:
   the sensor is disposed substantially on a central axis of the seismic streamer or ocean bottom cable.
Clause 16. The system of clause 1, wherein:
   the enclosure comprises a marine seismic ocean bottom node housing.
Clause 17. The system of clause 1, wherein:
   the sensor comprises a hydrophone.
Clause 18. A sensor, comprising:
   a positive output node and a negative output node;
   first and second generally planar sensing elements, each sensing element comprising a positive side and a negative side; and
   a body formed by first and second opposing shells, wherein each of the first and second shells is electrically conductive;
   wherein the first sensing element is disposed on an interior surface of the first shell such that its positive side is in contact with the first shell, and the second sensing element is disposed on an interior surface of the second shell such that its negative side is in contact with the second shell;
   wherein the positive output node is electrically coupled to the positive side of the second sensing element, and the negative output node is electrically coupled to the negative side of the first sensing element; and
   wherein the positive output node and the negative output node are accessible outside the body.
Clause 19. The sensor of clause 18, wherein:
   each of the first and second sensing elements comprises a piezoelectric element.
Clause 20. A sensor, comprising:
   a first output node and a second output node;
   an electrically conductive hollow cylinder comprising first and second ends; and first and second generally planar sensing elements, each comprising a first side and a second side;
   wherein the first side of each of the first and second sensing elements is in contact with a respective one of the first and second ends of the hollow cylinder;
   wherein one of the first and second output nodes is electrically coupled to the hollow cylinder; wherein the other of the first and second output nodes is electrically coupled to the second side of each of the first and second sensing elements; and
   wherein surface areas of the first and second sensing elements and of the hollow cylinder are scaled such that a first parasitic capacitance between the first output node and an enclosure in which the sensor is to be contained is substantially equal to a second parasitic capacitance between the second output node and the enclosure.
Clause 21. The sensor of clause 20, wherein:
   each of the first and second sensing elements comprises a piezoelectric element.
Clause 22. A sensor, comprising:
   an electrically insulative ring comprising first and second ends; and
   first and second generally planar sensing elements, each comprising a positive side and a negative side;
   wherein the first and second sensing elements are adhered to opposite ends of the ring such that the sensing elements face in opposite directions;
   wherein the first and second sensing elements are wired in parallel such that their positive sides are electrically coupled to one another and their negative sides are electrically coupled to one another; and
   wherein the positive sides are electrically coupled to a positive output node of the sensor and the negative sides are electrically coupled to a negative output node of the sensor.
Clause 23. The sensor of clause 22, wherein:
   each of the first and second sensing elements comprises a piezoelectric element.
Clause 24. The sensor of clause 22, wherein:
   each of the first and second sensing elements comprises a piezoelectric ceramic/metal plate bender disk.
Clause 25. A method of manufacturing a marine seismic sensor system, comprising: providing a sensor element that comprises a positive output node and a negative output node; providing an enclosure suitable for submersion in a body of water; and
   disposing the sensor element within the enclosure in a manner such that a first parasitic capacitance between the positive output node and the enclosure is substantially equal to a second parasitic capacitance between the negative output node and the enclosure.
Clause 26. The method of clause 25, further comprising:
   coupling the positive and negative output nodes of the sensor element to respective inputs of a differential amplifier via at least one twisted pair of conductors.
Clause 27. The method of clause 25:
   wherein the sensor comprises a conductive hollow cylinder and first and second piezoelectric sensing elements disposed on opposite ends of the cylinder; and
   wherein the method further comprises scaling surface areas of the first and the second piezoelectric sensing elements and of the cylinder such that the first and the second parasitic capacitances are substantially equal when the sensor element is disposed within the enclosure.

## Claims

1. A marine sensor system, comprising:
a sensor (1600) that comprises:
an electrically conductive hollow cylinder (1602) comprising first and second ends (1604, 1606), each of the first and second ends defining an outward-facing surface; and
first and second generally planar sensing elements (1608, 1610), each comprising a first side and a second side;
wherein the first side of each of the first and second sensing elements (1608, 1610) is in contact with a respective one of the outward-facing surfaces of the first and second ends (1604, 1606) of the hollow cylinder;
wherein one of the positive and negative output nodes (1614) is electrically coupled to the hollow cylinder; and
wherein the other of the positive and negative output nodes (1616) is electrically coupled to the second side of each of the first and second sensing elements.

2. The system of claim 1:
further comprising a differential amplifier (1316) having a first signal input (1312) and a second signal input (1314); and
wherein the positive output node (1616) of the sensor (1600) is coupled to the first signal input (1312) of the differential amplifier, and the negative output node (1614) of the sensor (1600) is coupled to the second signal input (1314) of the differential amplifier.

3. The system of claims 2, wherein:
the coupling of the output nodes of the sensor to the signal inputs of the differential amplifier comprises at least one twisted pair of conductors (1318).

4. The system of any of the preceding claims, wherein:
a surface area of the positive output node (1616) of the sensor (1600) is substantially equal to a surface area of the negative output node (1614) of the sensor (1600).

5. The system of any of the preceding claims:
further comprising an enclosure (1800) defining an interior volume and configured to be immersed in a body of water; and
wherein the sensor (1600) is disposed in the interior volume of the enclosure (1800) in a manner such that parasitic capacitances (C4) formed between the enclosure (1800) and the respective output nodes of the sensor (1600) are substantially equal.

6. The system of any of the preceding claims, wherein:
each of the first and second sensing elements (1608, 1610) comprises a piezoelectric element.

7. The system of any of the preceding claims, wherein:
the positive output node (1616) of the sensor (1600) and the negative output node (1614) of the sensor (1600) are substantially equidistant from the enclosure.

8. The system of any of the preceding claims, wherein:
the enclosure (1800) comprises an outer jacket of a seismic streamer or ocean bottom cable.

9. The system of claim 8, wherein:
the sensor (1600) is disposed substantially on a central axis of the seismic streamer or ocean bottom cable.

10. The system of any of claims 1 to 7, wherein:
the enclosure (1800) comprises a marine seismic ocean bottom node housing.

11. The system of any of the preceding claims, wherein:
the sensor (1600) comprises a hydrophone.
